# EUROPEAN PATENT APPLICATION

(11) **EP 2 884 630 A1**
(43) Date of publication of application: **17.06.2015**
(21) Application number: 13196916.4
(22) Date of filing: 12.12.2013
(51) Int. Cl.: H02K 1/32

(54) **An electric machine**

(71) Applicant: ABB Technology AG, 8050 Zürich (CH)
(72) Inventor: Halmesmäki, Wille, 00380 Helsinki (FI)
(74) Representative: Kolster Oy Ab

(57) **Abstract**

The electric machine comprises a rotor (100) with a first end (E1), a second end (E2), axial air channels (A1) and first radial air channels (R1) and a stator with second radial air channels. The rotor (100) is divided into at least two axial sections (X1, X2) having a first end (X10, X20) facing towards the first end (E1) and a second end (X11, X21) facing towards the second end (E1) of the rotor (100). The axial air channels (A1) start from the first end (E1) of the rotor (100) and are divided into a number of groups (G1, G2) corresponding to the number of rotor sections (X1, X2). The axial air channels (A1) in a group (G1, G2) terminate at the second axial end (X11, X21) of the rotor section (X1, X2) that has a number corresponding to the number of the group (G1, G2). The axial air channels (A1) in a group (G1, G2) are connected to the first radial air channels (R1) only in the group (G1, G2) where the axial air channels (A1) terminate.

## Description

### FIELD OF THE INVENTION

The present invention relates to an electric machine.

### BACKGROUND ART

US patent 4,641,051 discloses an electric machine. The rotor is composed of thin metal sheets that are grouped together to form packages of metal sheets. There are further separation sheets between each package of metal sheets. Radial air channels are formed with these separation sheets. Axial air channels are formed by die cuttings in the metal sheets and the separation sheets. The axial air channels extend along the length of the rotor and they are open at both axial ends of the rotor. The radial air channels open into the axial air channels and to the outer surface of the rotor. The cooling of the electric machine is thus symmetric as cooling air enters from both axial ends of the rotor into the axial air channels. The cooling air flows further in the axial air channels towards the axial middle portion of the rotor. A portion of the cooling air is deviated to the radial air channels located at end portions of the rotor. A major portion of the cooling air flows, however, to a middle portion of the rotor and is there deviated to the radial air channels. This means that the axial middle portion of the rotor is in standard designs excessively cooled.

The distribution of the cooling air within the rotor is in the US patent 4,641,051 improved by blocking off some of the air flow into the radial air channels located in the axial middle portion of the rotor. This is done by arranging a radial metal sheet provided with blocking surfaces symmetrically on both sides of the axial centre plane of the rotor. The blocking surfaces are located in every other axial air channel in each metal sheet. The blocking surfaces are in the two opposite metal sheets located axially on both sides of the centre plane of the rotor angularly offset. Half of the axial air channels extend from an end of the rotor to the first metal sheet and the other half extends through the first metal sheet to the second metal sheet. Some of the axial air channels could extend through the whole axial length of the rotor i.e. these axial channels would not be blocked off at all. The arrangement results in a more even cooling air distribution along the axial direction of the rotor.

The arrangement in the US patent 4,641,051 is suitable only for a symmetrically cooled electric machine. The axial air channels are open at both ends of the rotor and cooling air is thus directed into the axial air channels from both ends of the rotor.

### BRIEF DESCRIPTION OF THE INVENTION

An object of the present invention is to achieve an electric machine with an improved cooling arrangement.

The electric machine according to the invention is characterized by what is stated in the independent claim 1. Some preferred embodiments of the invention are disclosed in the dependent claims.

The electric machine comprises a rotor having a first end, a second end, axial air channels being open at the first end of the rotor and closed at the second end of the rotor, and first radial air channels extending between the axial air channels and an outer perimeter of the rotor, and a stator having second radial air channels extending between an inner perimeter and an outer perimeter of the stator.

The electric machine is characterized in that:
the rotor is divided into at least two axial sections between the first end and the second end of the rotor, the numbering of the rotor sections starting from the first end of the rotor and growing towards the second end of the rotor, each rotor section having a first axial end facing towards the first end of the rotor and a second axial end facing towards the second end of the rotor,
the axial air channels start from the first end of the rotor and are divided into a number of groups corresponding to the number of the rotor sections,
the axial air channels in a group terminate at the second axial end of the rotor section that has a number corresponding to the number of the group,
the axial air channels in a group are connected to the first radial air channels only in the group where the axial air channels terminate.

The cooling air that enters into the rotor from the first end of the rotor is divided into portions corresponding to the number of groups of axial air channels. The cooling air that enters into the first group of axial air channels will only be distributed to the first radial air channels in the first section of the rotor. The cooling air that enters into the second group of axial air channels will only be distributed to the first radial air channels in the second section of the rotor etc.

The axial air channels in the first group are blocked at the end of the first section, the axial air channels in the second group are blocked at the end of the second section etc.

The axial air channels in the second group are open to the first radial air channels only in the second section i.e. they are blocked to the first radial air channels in the first section. The axial air channels in the third group are open to the first radial air channels only in the third section i.e. they are blocked to the first radial air channels in the first and the second section etc.

The result of this arrangement is that the asymmetrically cooled electric machine according to the invention has a more uniform distribution of cooling air along the axial length of the electric machine compared to prior art solutions. The distribution of cooling air will be more uniform in the rotor and the stator of the electric machine.

### BRIEF DESCRIPTION OF THE DRAWINGS

In the following the invention will be described in greater detail by means of preferred embodiments with reference to the attached drawings, in which
Figure 1 shows an axial cross section of an electric machine,
Figure 2 shows an envelope curve of the air velocity distribution in the first radial air channels in a prior art rotor,
Figure 3 shows an axial cross section of a prior art rotor in an electric machine,
Figure 4 shows a radial cross section of a portion of an electric steel sheet in a prior art rotor,
Figure 5 shows a radial cross section of a portion of an air duct sheet in a prior art rotor,
Figure 6 shows an envelope curve of the air velocity distribution in the first radial air channels in a rotor according to a first embodiment of the invention,
Figure 7 shows an axial cross section of a rotor divided into two sections according to a first embodiment of the invention,
Figure 8 shows a radial cross section of a portion of a first air duct sheet used in a rotor according to the first embodiment of the invention,
Figure 9 shows a radial cross section of a portion of a second air duct sheet used in a rotor according to the first embodiment of the invention,
Figure 10 shows an axial cross section of the rotor divided into three sections in a second embodiment of the invention,
Figure 11 shows a radial cross section of a portion of a first air duct sheet used in a rotor according to the second embodiment of the invention,
Figure 12 shows a radial cross section of a portion of a second air duct sheet used in a rotor according to the second embodiment of the invention,
Figure 13 shows a radial cross section of a portion of a third air duct sheet used in a rotor according to the second embodiment of the invention.

### DETAILED DESCRIPTION OF THE INVENTION

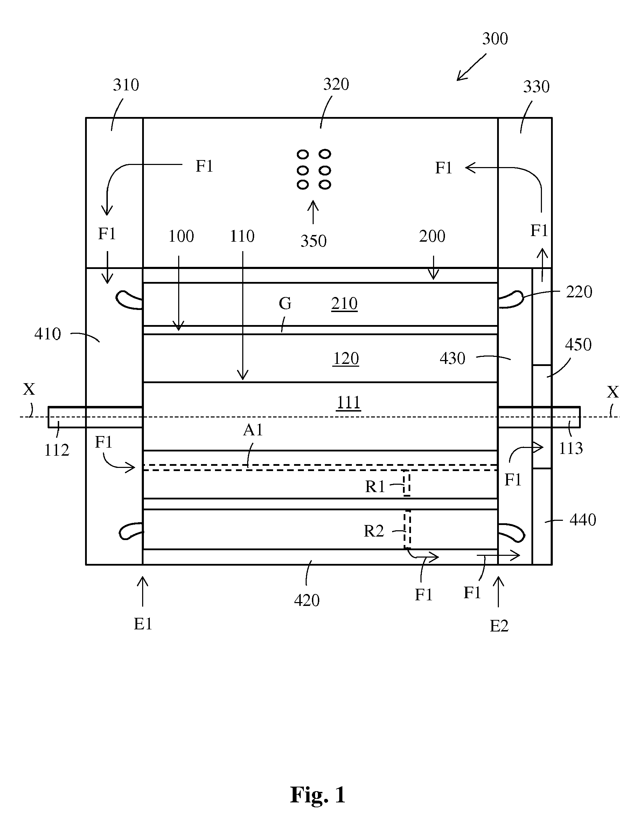

Figure 1 shows an axial cross section of an electric machine. The electric machine comprises a cylindrical rotating rotor 100 and a cylindrical stationary stator 200 surrounding the rotor 100. The stator comprises a core 210 and a stator winding 220. The rotor 100 comprises a shaft 110 with a middle portion 111 and two opposite end portions 112, 113. The rotor 100 comprises further a rotor core 120 surrounding the middle portion 111 of the shaft 110. There is an air gap G between the inner surface of the stator core 210 and the outer surface of the rotor core 120. The rotor core 120 comprises axial air channels A1 extending along the axial X-X length of the rotor core 120. The rotor core 120 comprises further first radial air channels R1 extending between the axial air channels A1 and the outer surface of the rotor core 120. The stator core 210 comprises second radial air channels R2 extending between the inner surface and the outer surface of the stator core 210. The rotor 100 has a first end E1 and a second opposite end E2. The axial air channels A1 are open at the first end E1 of the rotor 100 and closed at the second end E2 of the rotor 100. The cooling of the electric machine is thus asymmetrical as cooling air is directed into the axial air channels A1 only from the first end E1 of the rotor 100. The figure shows only one axial air channel A1, but there are a number of axial air channels A1 distributed evenly around the centre of the rotor 100. The figure shows also only one first radial air channel R1 and one second radial air channel R2, but there are a number of first radial air channels R1 and second radial air channels R2 distributed along the axial X-X length of the rotor 100.

There is an air cooler 300 located above the electric machine. The air cooler comprises a first compartment 310 located above the first end E1 of the rotor 100, a second compartment 320 at the middle of the air cooler 300 and a third compartment 330 located above the second end E2 of the rotor 100. The second compartment 320 at the middle of the air cooler 300 comprises cooling air pipes 350 extending in a traverse direction in relation to the axial direction X-X across the second compartment 320 of the air cooler 300. A primary air circulation circulates cooling air through the cooling air pipes 350. The figure shows only six cooling air pipes 350, but the second compartment 320 is filled with cooling air pipes 350.

There is an inlet air plenum 410 at the first end E1 of the electric machine and a first outlet air plenum 420 surrounding the stator 200. There is further a second outlet air plenum 430 located at the second end E2 of the electric machine and a third outlet air plenum 440 located axially X-X outside the second outlet air plenum 430 at the second end E2 of the electric machine. There are air flow passages between the inlet air plenum 410 and the first compartment 310 of the air cooler 300. The axial air channels A1 in the rotor 100 open into the inlet air plenum 410 at the first end E1 of the electric machine. The second radial air channels R2 in the stator 200 open into the first outlet air plenum 420. There are air passages between the first outlet air plenum 420 and the second outlet air plenum 430 at the second end E2 of the electric machine. There is further an air passage between the second outlet air plenum 430 and third outlet air plenum 440. The third outlet plenum 440 is provided with a radial fan 450 mounted on the end portion 113 of the shaft 110 of the electric machine. The air passage between the second outlet air plenum 430 and the third outlet air plenum 440 is arranged through the radial fan 450. The radial fan 450 sucks air from the second outlet air plenum 430 into the centre of the radial fan 450 and blows the air from the circumference of the radial fan 450 into the third outlet air plenum 440. There are further air passages between the third outlet air plenum 440 and the third compartment 330 in the air cooler 300.

The secondary air circulation is an air circulation flowing in a closed loop between the air cooler 300 and the electric machine. Cooling air F1 flows from the first compartment 310 of the air cooler 300 to the inlet air plenum 410, from the inlet air plenum 410 to the axial air channels A1 at the first end E1 of the rotor 100, from the axial air channels A1 to the first radial air channels R1 in the rotor 100, from the first radial air channels R1 in the rotor 100 to the air gap G between the rotor 100 and the stator 200, from the air gap G to the second radial air channels R2 in the stator 200, from the second radial air channels R2 in the stator 200 to the first outlet air plenum 420 surrounding the stator 200, from the first outlet plenum 420 to the second outlet plenum 430 at the second end E2 of the rotor 100, from the second outlet plenum 430 to the middle portion of the radial fan 450 in the third outlet air plenum 440, form the circumference of the radial fan 450 to the third outlet air plenum 440, from the third outlet plenum 440 to the third compartment 330 in the air cooler 300 and from the third compartment 330 in the air cooler 300 through the second compartment 320 in the air cooler 300 to the first compartment 310 in the air cooler 300. The cooling air flow F1 is cooled when it passes across the cooling air pipes 350 in the second compartment 320 in the air cooler 300.

Cooling air F1 is thus directed to the axial air channels A1 from the first end E1 of the rotor 100. The cooling air F1 flows in the axial air channels A1 towards to opposite second axial end E2 of the rotor 100. Cooling air F1 is deviated to the first radial air channels R1 as the cooling air flow F1 propagates towards the second end E2 of the rotor 100. The axial air channels A1 are closed at the second end E2 of the rotor. This means that all the cooling air flow F1 that flows into the axial air channels A1 will be divided to the first radial air channels R1 along the axial X-X length of the rotor 100.

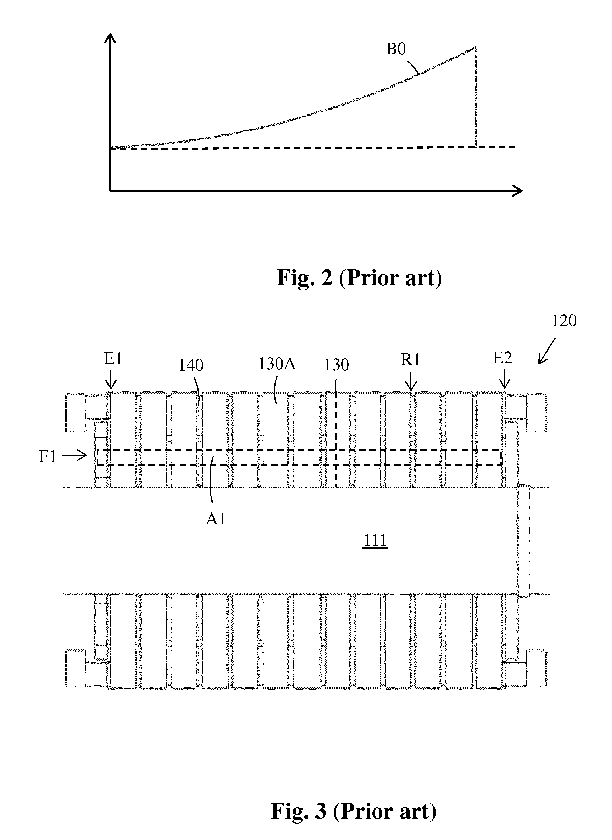

Figure 2 shows an envelope curve of the air velocity distribution in the first radial air channels in a prior art rotor. The air distribution curve B0 shows that the air velocity in the first radial air channels R1 is increasing towards the second end E2 of the rotor 100. The axial air channels A1 extend through the whole rotor 100 in prior art asymmetrically cooled electric machines. Each of the first radial air channels R1 along the axial X-X length of the rotor open into each axial air channel A1. The problem in prior art asymmetrically cooled electric machines is that a major portion of the cooling air F1 flows from the first end E1 of the rotor 100 with an accelerated speed to the second end E2 of the rotor 100 and is there deviated to the first radial air channels R1. This means that the second end E2 of the electric machine is cooled more than the rest of the electric machine.

Figure 3 shows an axial cross section of a prior art rotor. The rotor core 120 has a laminated structure i.e. the rotor core 120 is composed of thin electric steel sheets 130. The electric steel sheets 130 are seated on the middle portion 111 of the shaft 110 of the rotor 100. The outer perimeter of the electric steel sheets 130 forms the outer surface of the cylindrical rotor core 120. A number of electric steel sheets 130 are grouped together to form a sheet package or core section 130A. The stator core 120 is composed of several sheet packages or core sections 130A located along the axial direction X-X of the rotor 100. Air duct sheets 140 are located between each sheet package 130A. The air duct sheets 140 form the first radial air channels R1 in the rotor 100. The axial air channels A1 are formed into the electric steel sheets 130 and into the air duct sheets 140.

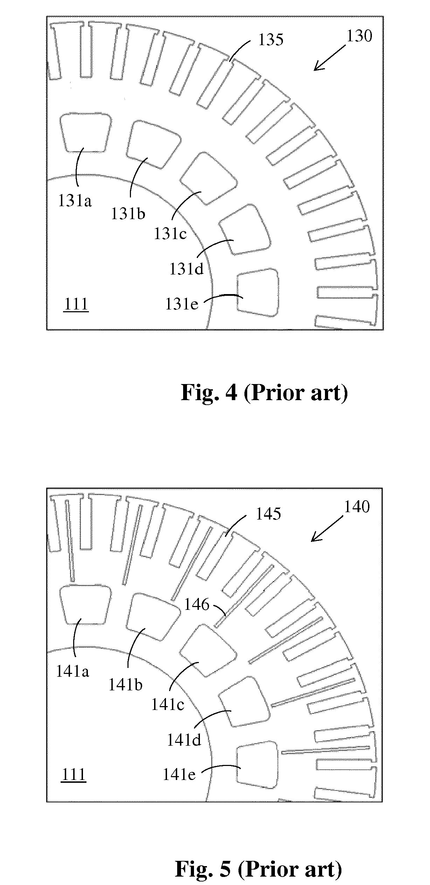

Figure 4 shows a radial cross section of a portion of an electric steel sheet in a prior art rotor. The electric steel sheet 130 has essentially the form of a disc. The inner surface of the disc is adapted to be seated on the middle portion 111 of the shaft 110 of the rotor 100 and the outer surface of the disc forms the outer surface of the cylindrical rotor core 120. The electric steel sheet 130 comprises axial openings 131 a, 131b, 131c, 131d, 131e being punched into the electric steel sheet 130 near the inner perimeter of the electric steel sheet 130. The axial openings 131a, 131b, 131c, 131d, 131e are distributed evenly around the centre of the electric steel sheet 130 and form a first pattern. The axial openings 131a, 131b, 131c, 131d, 131e form the axial air channels A1 in the rotor 100. The electric steel sheet 130 comprises further radially directed cavities 135 being punched evenly into the outer perimeter of the electric steel sheet 130. The cavities 135 open into the outer perimeter of the electric steel sheet 130. The cavities 135 receive the rotor winding.

Figure 5 shows a radial cross section of a portion of an air duct sheet in a prior art rotor. The air duct sheet 140 has essentially the form of a disc. The inner surface of the disc is adapted to be seated on the middle portion 111 of the rotor 100 and the outer surface of the disc forms the outer surface of the cylindrical rotor core 120. The air duct sheet 140 comprises axial openings 141 a, 141 b, 141 c, 141 d, 141 e being punched into the air duct sheet 140 near the inner perimeter of the air duct sheet 140. The axial openings 141 a, 141 b, 141 c, 141 d, 141 e in the air duct sheet 140 form a second pattern being identical with the first pattern of axial openings in the electric steel sheet 130. The axial openings 141 a, 141 b, 141 c, 141 d, 141 e form the axial air channels A1 through the air duct sheets 140. Each air duct sheet 140 comprises further radially directed cavities 145 being punched evenly into the outer perimeter of the air duct sheet 140. The cavities 145 open into the outer perimeter of the air duct sheet 140. The cavities 145 receive the rotor winding. There are further brackets 146 attached to one surface of the air duct sheet 140. The brackets 146 extend in the radial direction between the cavities 145. The brackets 146 protrude from the surface of the air duct sheet 140. The brackets 146 keep the surface of the air duct sheet 140 and the surface of the adjacent electric steel sheet 130 at a certain distance from each other. The first radial air channels R1 are thus formed between an air duct sheet 140 and an adjacent electric steel sheet 130. The radially extending brackets 146 function further as propellers causing air to flow from the axial air channels A1 into the first radial air channels R1.

All axial air channels A1 are thus open from the first end E1 of the rotor 100 to the second end E2 of the rotor 100. Each first radial air channel R1 opens into each axial air channel A1.

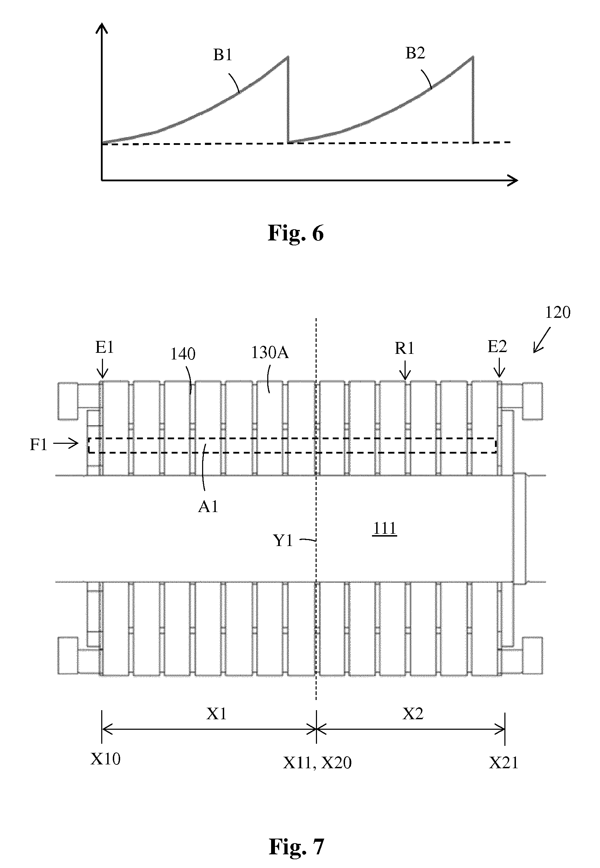

Figure 6 shows an envelope curve of the air velocity distribution in the first radial air channels in a rotor according to a first embodiment of the invention. The distribution of the air velocity in the first radial air channels R1 in the first section X1 of the rotor is increasing from the first end E1 of the rotor towards the first division point Y1 of the rotor. The distribution of the air velocity in the first radial air channels R1 in the second section X2 of the rotor is increasing from the first division point Y1 towards the second end E2 of the rotor. The total distribution of the air velocity in the first radial air channels R1 is, however, more even in the rotor according to the invention. This will result in a more even cooling of the electric machine.

Figure 7 shows an axial cross section of a rotor divided into two sections according to a first embodiment of the invention. The rotor corresponds to the rotor shown in figure 3 except for the fact that the rotor is divided into two axial X-X sections X1, X2. The first section X1 has a first end X10 facing towards the first end E1 of the rotor 100 and a second end X11 facing towards the second end E2 of the rotor 100. The first end X10 of the first rotor section X1 coincides with the first end E1 of the rotor 100. The second section X2 has a first end X20 facing towards the first end E1 of the rotor 100 and a second end X21 facing towards the second end E2 of the rotor 100. The second end X21 of the second rotor section X2 coincides with the second end E2 of the rotor 100. The only difference in the two sections X1, X2 is in the air duct sheets 150, 160 used in the respective sections X1, X2.

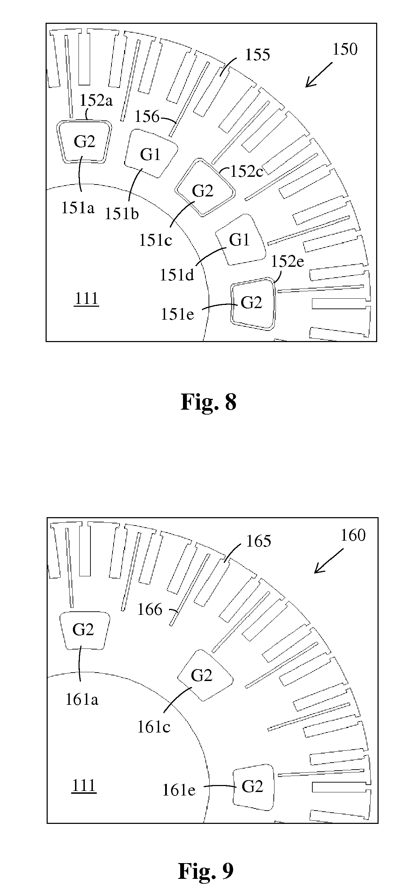

Figure 8 shows a radial cross section of a portion of a first air duct sheet and figure 9 shows a radial cross section of a portion of a second air duct sheet used in a rotor according to the first embodiment of the invention.

The first air duct sheet 150 shown in figure 8 is used in the first section X1 of the rotor 100. The first air duct sheet 150 comprises a second pattern of axial air openings 151 a, 151 b, 151 c, 151 d, 151e being identical with the first pattern of axial air openings 131 a, 131 b, 131 c, 131 d, 131 e in the electric steel sheets 130. The second air duct sheet 160 shown in figure 9 is used in the second section X2 of the rotor 100. The second air duct sheet 160 comprises a third pattern of axial air openings 161 a, 161c, 161e being identical with the first pattern of axial air openings 131 a, 131 b, 131 c, 131 d, 131 e in the electric steel sheet 130 except that every second axial air opening is blocked in the second air duct sheet 160. This means that all the axial air channels A1 are open from the first end E1 of the rotor 100 to the first division point Y1 of the rotor 100 and that only half of the axial air channels A1 are open from the first division point Y1 of the rotor 100 to the second end E2 of the rotor 100. The first air duct sheets 150 are further provided with collars 152a, 152c, 152e around every second of the axial air openings 151 a, 151 c, 151 e. The collars 152a, 152c, 152e are provided on those axial air channels A1 which pass through the whole axial X-X length of the rotor 100. The collars 152a, 152c, 152e protrude from the surface of the first air duct sheet 150 to the same height as the brackets 156. The collars 152a, 152c, 152e close the axial air channels 151a, 151c, 151e in the radial direction i.e. there is no connection from these axial air channels 151 a, 151 c, 151e to the first radial air channels R1.

The axial air channels A1 in the rotor 100 are thus divided into two groups G1, G2. The first group G1 of axial air channels A1 passes only through the first section X1 of the rotor 100 and the second group G2 of axial air channels A1 passes through both sections X1, X2 of the rotor 100.

The cooling air F1 flow is thus divided into two portions at the first end E1 of the rotor 100. A first portion of cooling air F1 flows at the first end E1 of the rotor 100 into the first group G1 of axial air channels A1 and a second portion of cooling air F1 flows at the first end E1 of the rotor 100 into the second group G2 of axial air channels A1. The number of axial air channels A1 in the first group G1 is the same as the number of axial air channels A1 in the second group G2. The cross section area of each axial air channel A1 is further the same. This means that the first portion and the second portion of the cooling air flow F1 are equal.

The first portion of cooling air F1 that flows in the first group G1 of axial air channels A1 flows to the first radial air channels R1 in the first portion X1 of the rotor 100. The first portion of cooling air F1 cannot penetrate into the second portion X2 of the rotor 100 at all as the second air duct sheets 160 do not contain axial air openings corresponding to the first group G1 of axial air channels A1. The whole first portion of the cooling air flow F1 will thus be distributed into the first radial air channels R1 in the first portion X1 of the rotor 100.

The second portion of cooling air F1 that flows in the second group G2 of axial air channels A1 flows directly to the first division point Y1 of the rotor 100. The collars 152a, 152c, 152e in the air openings 151a, 151c, 151e in the first air duct sheets 150 corresponding to the second group G2 of axial air ducts A1 hinder cooling air F1 from flowing to the first radial air channels R1 in the first portion X1 of the rotor 100. The second portion of cooling air F1 will flow to the first radial air channels R1 only in the second portion X2 of the rotor 100. The whole second portion of the cooling air flow F1 will thus be distributed into the first radial air channels R1 in the second portion X2 of the rotor 100.

The natural solution is that all second air duct sheets 160 in the second section X2 of the rotor 100 are identical. The situation could, however, be such that only the first second air duct sheet 160 located at the first end of the second rotor section X2 is as shown in figure 9. The axial air channels A1 in the first group G1 would still be terminated at the second end X11 of the first rotor section X1 when reaching the first second air duct sheet 160 in the second rotor section X2. The other air duct sheets in the second rotor section X2 following the first second air duct sheet 160 could be provided with axial air channels A1 also in the first group G1 if this would for some reason be desirable.

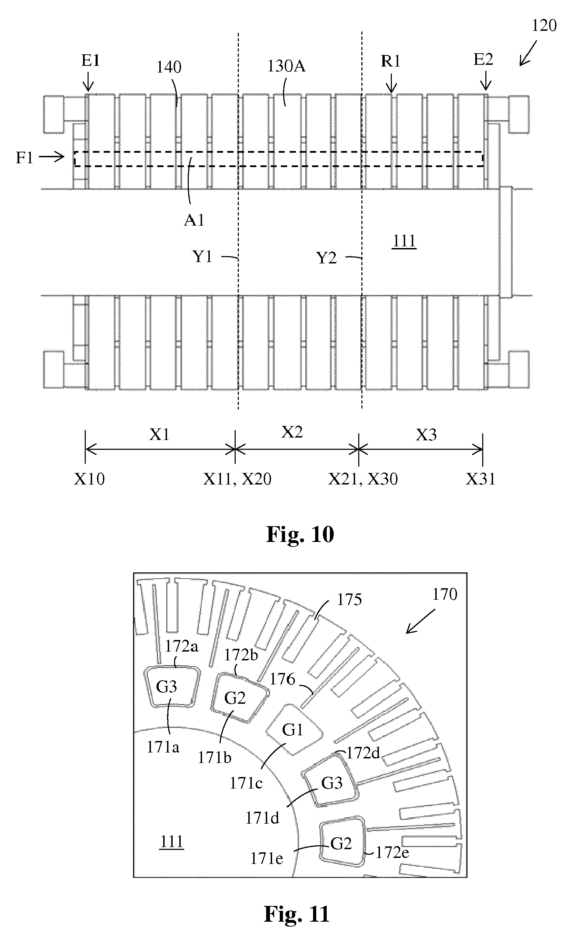

Figure 10 shows an axial cross section of the rotor divided into three sections in a second embodiment of the invention. The rotor corresponds to the rotor shown in figure 3 except for the fact that the rotor is divided into three axial X-X sections X1, X2, X3. The rotor is thus divided into three sections X1, X2, X3 with two division points Y1, Y2. The first section X1 has a first end X10 facing towards the first end E1 of the rotor 100 and a second end X11 facing towards the second end E2 of the rotor 100. The first end X10 of the first rotor section X1 coincides with the first end E1 of the rotor 100. The second section X2 has a first end X20 facing towards the first end E1 of the rotor 100 and a second end X21 facing towards the second end E2 of the rotor 100. The third section has a first end X30 facing towards the first end E1 of the rotor 100 and a second end X31 facing towards the second end E2 of the rotor 100. The second end X31 of the third rotor section X3 coincides with the second end E2 of the rotor 100. The only difference in the three sections X1, X2, X3 is in the air duct sheets 170, 180, 190 used in the sections X1, X2, X3.

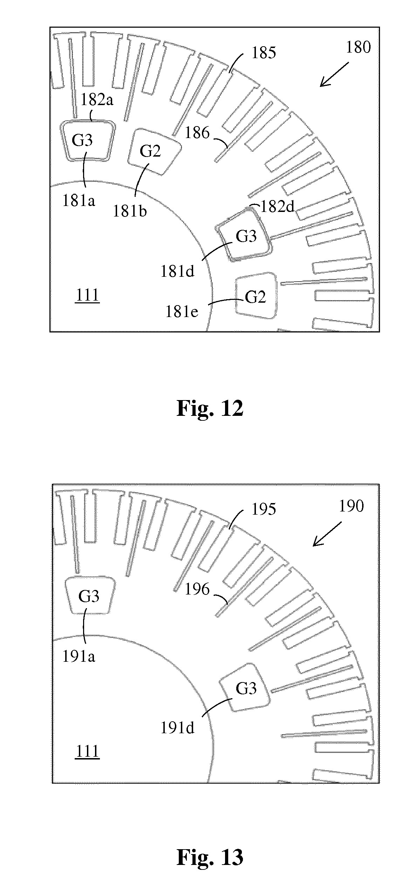

Figure 11 shows a radial cross section of a portion of a first air duct sheet, figure 12 shows a radial cross section of a portion of a second air duct sheet and figure 13 shows a radial cross section of a portion of a third air duct sheet used in a rotor according to the second embodiment of the invention.

The first air duct sheets 170 shown in figure 11 are used in the first section X1 of the rotor 100, the second air duct sheets 180 shown in figure 12 are used in the second section X2 of the rotor 100 and the third air duct sheets 190 shown in figure 13 are used in the third section X3 of the rotor 100. The general form and arrangement of all three air duct sheets 170, 180, 190 correspond to the two air duct sheets 150, 160 used when the rotor is divided into two sections. All three air duct sheets 170, 180, 190 comprises radially directed cavities 175, 185, 195 for the rotor winding and radially extending brackets 176, 186, 196 protruding from the surface of air duct sheets 170, 180, 190.

The axial air channels A1 are divided into three groups G1, G2, G3. The first group G1 of axial air channels A1 terminate at the second end X11 of the first section X1 of the rotor. The first group G1 of axial air channels A1 are open to all first radial air channels R1 in the first section X1 of the rotor. There are thus no collars around the axial air openings 171 c corresponding to the first group G1 of axial air channels A1 in the first air duct sheet 170.

The second group G2 of axial air channels A1 terminate at the second end X21 of the second section X2 of the rotor. The second group G2 of axial air channels A1 are open only to all first radial air channels R1 in the second section X2 of the rotor. The second group G2 of axial air channels A1 is closed to the first radial air channels R1 in the first section of the rotor. There are thus collars 172b, 172e around the axial air openings 171 b, 171e corresponding to the second group G2 of axial air channels A1 in the first air duct sheet 170 and no collars around the axial air openings 181 b, 181 e corresponding to the second group G2 of axial air channels A1 in the second air duct sheet 180.

The third group G3 of axial air channels A1 terminate at the second end X31 of the third section X3 of the rotor i.e. at the second end E2 of the rotor. The third group G3 of axial air channels A1 are open only to all first radial air channels R1 in the third section X3 of the rotor. The third group G3 of axial air channels A1 is closed to the first radial air channels R1 in the first X1 and the second X2 section of the rotor. There are thus collars 172a, 172d around the axial air openings 171a, 171d corresponding to the third group G3 of axial air channels A1 in the first air duct sheet 170 and also collars 182a, 182d around the axial air openings 181 a, 181 d corresponding to the third group G3 of axial air channels A1 in the second air duct sheet 180 but no collars around the axial air openings 191 a, 191 d around the axial air channels A1 corresponding to the third group G3 of axial air channels A1 in the third air duct sheet 190.

The number of axial air channels A1 in each group G1, G2, G3 is the same i.e. each group G1, G2, G3 comprises a third of the total number of axial air channels A1.

The number of different kinds of air duct sheets 150, 160, 170, 180, 190 to be used is determined by the number of sections X1, X2, X3 in the rotor. The first embodiment comprises two sections and the second embodiment comprises three sections. The rotor 100 could naturally be divided into four or more sections between the first end E1 and the second end E2 of the rotor 100. The numbering of rotor sections starts from the first end E1 of the rotor 100 and grows towards the second end E2 of the rotor 100. Each rotor section X1, X2, X3 has a first axial end X10, X20, X30 facing towards the first end E1 of the rotor 100 and a second axial end X11, X21, X31 facing towards the second end E2 of the rotor 100.

The axial X-X air channels A1 start from the first end E1 of the rotor 100 and they are divided into a number of groups G1, G2, G3 corresponding to the number of rotor 100 sections X1, X2, X3.

The axial air channels A1 in a group G1, G2, G3 terminate at the second axial end X11, X21, X31 of the rotor section X1, X2, X3 that has a number corresponding to the number of the group G1, G2, G3.

The axial air channels A1 in a group are connected to the first radial air channels R1 only in the group G1, G2, G3 where the axial air channels A1 terminate.

The first division point Y1 of the rotor 100 is in the first embodiment located at the axial middle point of the rotor 100. This need not, however, be the case. The first division point Y1 could be located at a distance from the middle point towards either end E1, E2 of the rotor 100.

The two divisions points Y1, Y2 of the rotor 100 are in the second embodiment located so that axial length of the sections X1, X2, X3 is equal. The division could, however, also be made so that the axial length of two or all three rotor sections X1, X2, X3 is different. The axial length of each rotor section length could e.g. increase or decrease progressively from the first end E1 towards the second end E2 of the rotor 100.

The number of axial air channels A1 in each rotor section X1, X2, X3 is the same in both embodiments. This need not be the case. The number of axial air channels A1 could be different in two or in all sections X1, X2, X3.

The closing of the connection between the axial air channels A1 and the first radial air channels R1 is in the two embodiments made with collars around the axial openings in the air duct sheets. This could instead be done by inserting a pipe from the first end E1 of the rotor 100 into each axial air channel A1 where the connection to the first radial air channels R1 is to be closed. The pipes would extend from the first end E1 of the rotor 100 to the respective division points Y1, Y2.

The electric steel sheets 130 used in the inventive rotor correspond to prior art electric steel sheets. All electric steel sheets 130 in the rotor are advantageously identical. It is easy to manufacture identical electric steel sheets for the whole rotor. The electric steel sheets 130 could naturally be used to block off axial air channels A1 in the same way as the air duct sheets 150, 160, 170, 180, 190 are used if this would for some reason be considered useful.

The rotor winding is advantageously formed as a squirrel cage. The squirrel cage is formed of axial X-X rods located in the cavities 135, 155, 165, 175, 185, 195 in the steel sheets 130 and the air duct sheets 150, 160, 170, 180, 190. The rods are short circuited at both ends of the rotor with a circular short ring located at each end of the rotor 100.

The rotor core is assembled so that a first external end plate is positioned at the bottom of a vertical mandrel. The electric steels sheets and the air duct sheets are then assembled around the mandrel on the first external end plate. A second external end plate is then placed on top of the package of sheets and the whole package is pressed in a vertical press. The external end plates are then tightened while the package is in the press with threaded rods extending between the end plates in an area outside the outer surface of the sheets. The rotor package locked between the external end plates is then removed from the press, lifted from the mandrel and heated in a furnace. The shaft is then pushed in a press into the heated rotor package in order to achieve a crimped connection between the shaft and the rotor package when the rotor package has cooled down. The external end plates are removed when the rotor package has cooled down. The axial bars in the squirrel cage are then pushed into the cavities and locked with swaging into the cavities. The axial bars are then attached with welding or soldering to the short circuit rings.

The electric steel sheets 130 are made from an iron alloy which may contain from zero to 6.5% of silicon. The thickness of the electric steel sheets 130 is 0.5 mm in the axial direction X-X. All the electric steel sheets 130 are identical in the rotor core 120. This means e.g. that all electric steels sheets 130 contain the same number of axial air openings 131 a, 131b, 131c, 131d, 131 e.

The air duct steel sheets 150, 160 are made from cold rolled steel sheet. The thickness of the air duct sheets 150, 160 is in the range of 1 to 3 mm. The height of the brackets 156, 166 from the surface of the air duct sheet 150, 160 is in the range of 5 to 10 mm. This means that the height of the collars 152a, 152c from the surface of the air duct sheet 150, 160 is also in the range of 5 to 10 mm.

The squirrel cage i.e. the rods and the short circuit rings are advantageously made of an electricly conducting material e.g. copper or aluminium.

The air cooler 300 shown in figure 1 is an air-to-air cooler. The invention is, however, not limited to such an air cooler. The invention can be used in connection with any type of air coolers e.g. air-to-air and air-to-fluid air coolers. The invention can also be used in a situation where no separate air cooler is used. Air outside the electric machine is then conducted as cooling air through the electric machine.

The invention is not limited to the examples described above but may vary within the scope of the claims.

## Claims

1. An electric machine comprises a rotor (100) having a first end (E1), a second end (E2), axial (X-X) air channels (A1) being open at the first end (E1) of the rotor (100) and closed at the second end (E2) of the rotor (100), and first radial air channels (R1) extending between the axial (X-X) air channels (A1) and an outer perimeter of the rotor (100), and a stator (200) having second radial air channels (R2) extending between an inner perimeter and an outer perimeter of the stator (200), **characterized in that**:
the rotor (100) is divided into at least two axial (X-X) sections (X1, X2, X3) between the first end (E1) and the second end (E2) of the rotor (100), the numbering of the rotor sections (X1, X2, X3) starting from the first end (E1) of the rotor (100) and growing towards the second end (E2) of the rotor (100), each rotor section (X1, X2, X3) having a first axial (X-X) end (X10, X20, X30) facing towards the first end (E1) of the rotor (100) and a second axial (X-X) end (X11, X21, X31) facing towards the second end (E1) of the rotor (100),
the axial air channels (A1) start from the first end (E1) of the rotor (100) and are divided into a number of groups (G1, G2, G3) corresponding to the number of the rotor (100) sections (X1, X2, X3),
the axial air channels (A1) in a group (G1, G2, G3) terminate at the second axial (X-X) end (X11, X21, X31) of the rotor section (X1, X2, X3) that has a number corresponding to the number of the group (G1, G2, G3),
the axial air channels (A1) in a group (G1, G2, G3) are connected to the first radial air channels (R1) only in the group (G1, G2, G3) where the axial air channels (A1) terminate.

2. An electric machine according to claim 1 **characterized in that** the rotor (100) has a laminated structure comprising electric steel sheets (130) formed into sheet packages (130A) along an axial direction (X-X) of the rotor (100) between the first end (E1) and the second end (E2) of the rotor (100), each sheet package (130A) being separated by an air duct sheet (150, 160, 170, 180, 190).

3. An electric machine according to claim 2, **characterized in that** the axial (X-X) air channels (A1) are formed by punching openings into the electric steel sheets (130) and the air duct sheets (150, 160, 170, 180, 190) and the first radial air channels (R1) are formed by the air duct sheets (150, 160, 170, 180, 190) between each sheet package (130A), said air duct sheets (150, 160, 170, 180, 190) comprising radially extending brackets (156, 166, 176, 186, 196) protruding from the surface of the air duct sheets (150, 160, 170, 180, 190).

4. An electric machine according to claim 3, **characterized in that** the rotor (100) is divided into two axial (X-X) sections (X1, X2) and that all electric steel sheets (130) in the rotor (100) are identical comprising a first pattern of axial air channels (A1).

5. An electric machine according to claim 4, **characterized in that** the first rotor section (X1) comprises first air duct sheets (150) having a second pattern of axial air channels (A1) being identical with the first pattern of axial air channels (A1) in the electric steel sheets (130), whereby a first group (G1) of axial air channels (A1) is formed of every second axial air channel (A1) in each first air duct sheet (150) and a second group (G2) of axial air channels (A1) is formed of the rest of the axial air channels (A1), said second group (G2) of axial air channels (A1) being provided with a collar (152a, 152c) in each first air duct sheet (150), said collar (152a, 152c) closing the corresponding axial air channel (A1) from the first radial air channel (R1) formed by said first air duct sheet (150).

6. An electric machine according to claim 5, **characterized in that** the second rotor section (X2) comprises second air duct sheets (160) having a third pattern of axial air channels (A1) being identical with the first pattern of axial air channels (A1) in the electric steel sheets (130) except that the axial air channels (A1) corresponding to the axial air channels (A1) in the first group (G1) of axial air channels (A1) is blocked in the second air duct sheets (160).
